# EUROPEAN PATENT APPLICATION

(11) **EP 1 170 176 A2**
(43) Date of publication of application: **09.01.2002**
(21) Application number: 01304863.2
(22) Date of filing: 04.06.2001
(51) Int. Cl.: B60R 1/12

(54) **External rear view mirror apparatus**

(30) Priority: 27.06.2000 BR 8001294
(71) Applicant: METAGAL INDUSTRIA E COMERCIO LTDA., Estado de Sao Paulo CEP:09990-090 (BR)
(72) Inventor: Myabukuro, Pedro Takashi, rue Das Monçoes, 326, Est. de Sao Paulo, CEP 09090-520 (BR)
(74) Representative: Johnstone, Douglas Ian

(57) **Abstract**

An external rear view mirror apparatus (11) for an automotive vehicle is provided and includes a C-shaped support (12). Each free end of the C-shaped support has a respective lower and upper articulated base (10,10') fixed onto a side door of the vehicle. The C-shaped support has a mirror (13) articulatedly fixed in its substantially vertical middle section. A lateral light comprising a bulb (1) held by a socket in a support (2) and surrounded by a non-opaque cover (3) is incorporated into the lower base (10) of the apparatus. Alternatively, the lateral light may be fixed to a lower section of the C-shaped support (12) by a brace.

## Description

The present invention relates to an external rear view mirror apparatus or set for automotive vehicles, particularly those of a large size such as lorries or buses.

Such large vehicles are known to have external rear view mirror apparatus. The apparatus comprises a C-shaped support and each free end of the C-shaped support has a respective lower and upper articulated base fixed onto a side door of the cabin of the vehicle. The C-shaped support has a mirror articulatedly fixed in its substantially vertical middle section.

The mirror apparatus is usually of a large size and prominently projects from a side of a vehicle. Due to this, such mirror apparatus often suffer damage as a result of impact, such as when vehicles pass very close to one another. The side of the vehicle may also suffer damage.

It is therefore an object of the present invention to provide an external rear view mirror apparatus which reduces the chance of damage.

According to the present invention there is provided an external rear view mirror apparatus for an automotive vehicle comprises a C-shaped support with an adjustable mirror, free ends of the C-shaped support each being connected to an articulated base adapted to be connected to a side of the vehicle, and at least one lateral light comprising a light source, the lateral light being incorporated into said at least one base and/or being fixed to at least one section of the C-shaped support.

The lateral light improves the visibility of the external rear view mirror apparatus of the vehicle as well as signalling the side of the vehicle. Existing mirror apparatus often suffer impact as a result of difficulty in evaluating the position of the mirror apparatus with reference to the body of the vehicle and/or due to unfavourable illumination conditions and/or distraction of the driver and/or other factors. The lateral light of the present invention improves the visibility of the external rear view mirror apparatus and the side of the vehicle, thus reducing the chance of impact and hence damage to the mirror apparatus and/or possibly to the side of the vehicle.

The lateral light is of simple construction which can be easily manufactured and is of a low cost.

The light source may comprise a bulb and the lateral light may include a support having a bulb receptor for the bulb, a non-opaque cover covering the bulb and being connected to the support, and the support may be connected to a free end of the C-shaped support and at least a part of the support may be connected to one of the articulated bases.

Alternatively, the light source may comprise a bulb and the lateral light may include a support having a bulb receptor for the bulb, a non-opaque cover covering the bulb and being connected to the support, and the support may include a brace fixed to at least one free end section of the C-shaped support.

Preferably, one base is adapted to be beneath the other base when the apparatus is fixed to the side of a vehicle. The lateral light may be incorporated into the lower base. The lateral light may be fixed to the lower free end section of the C-shaped support. The bulb is conveniently disposed in a substantially downwardly facing direction.

At least part of the support may be connected to a recess in one of the bases via a spring and washer set and the support may supply electricity from the vehicle to the bulb.

The lateral light may flash and constitute a so-called blinker or indicator.

The invention may comprise an automotive vehicle including an external rear view mirror apparatus as previously described.

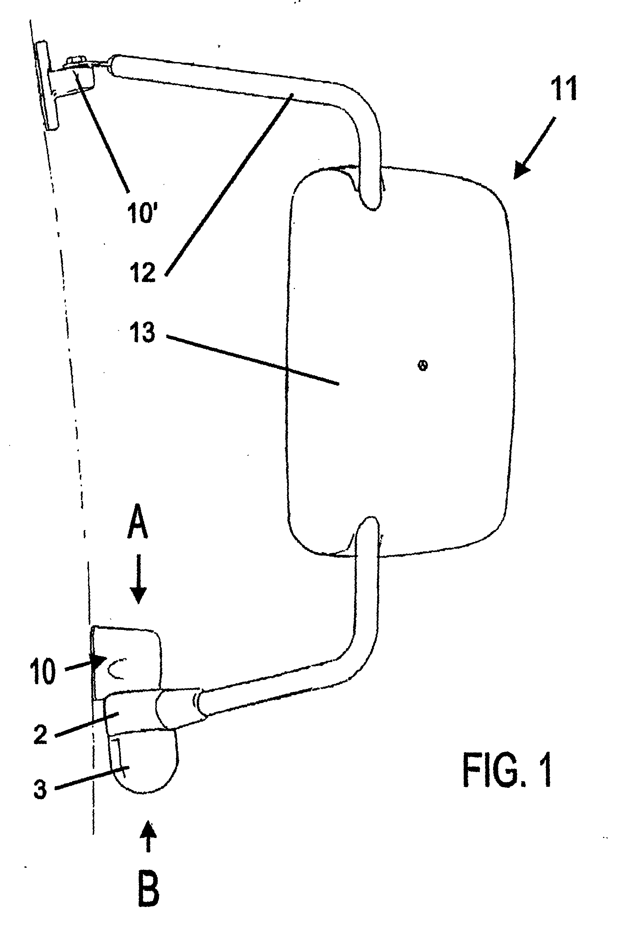

Embodiments of the present invention will now be described, by way of example, with reference to the accompanying drawings, in which:-
Figure 1 is an elevational view of one embodiment of the invention;

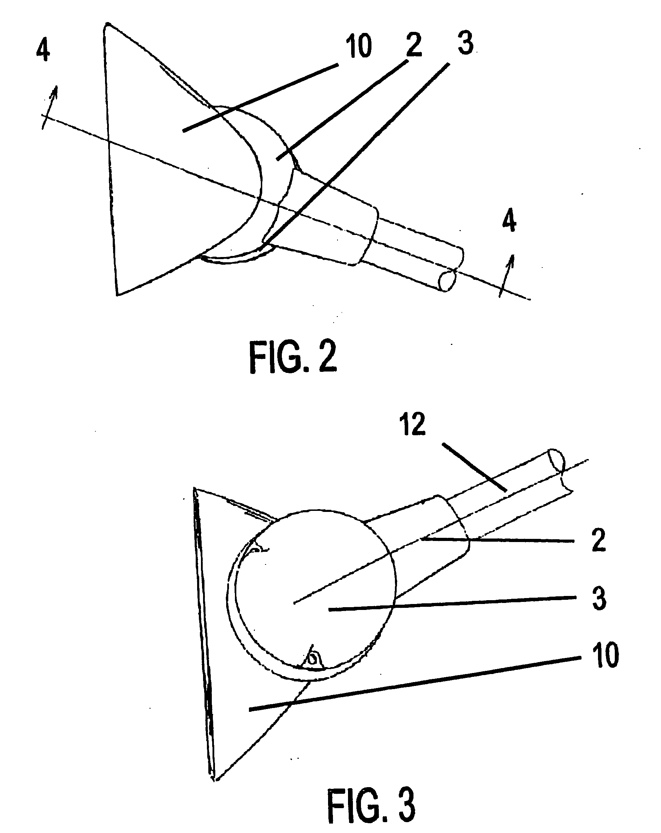

Figures 2 and 3 are views in the direction of arrows A and B of Figure 1 respectively; and

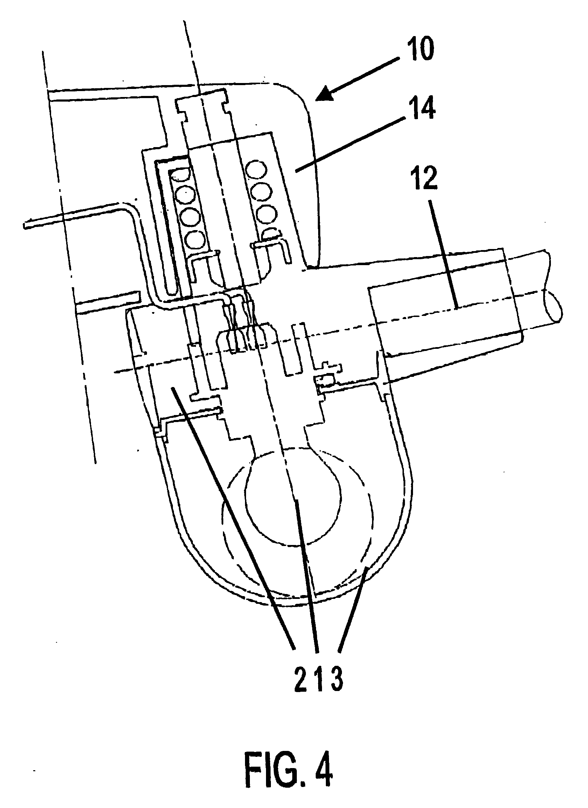

Figure 4 is a sectional detail on the line 4-4 of Figure 1.

Referring to the accompanying drawings, an external rear view mirror apparatus 11 for an automotive vehicle is provided and comprises a C-shaped support 12. Each free end of the C-shaped support 12 has a respective lower and upper articulated base 10,10' fixed onto a side door of the vehicle. The C-shaped support has a mirror 13 articulatedly fixed in its substantially vertical middle section.

A lateral light forms part of the apparatus and comprises a bulb 1 held by a bulb receptor socket in a support 2. The bulb 1 is surrounded by a non-opaque cover 3 or lens through which light is irradiated and the cover 3 is fitted to another socket in the support. The support has connected to it a radially projecting side part for supporting the lower free end of the C-shaped support 12.

The support 2 is fixed to the lower articulated base 10 by having a part of the support fixed inside a hollow part 14 of the lower base 10 via a spring and washer set. This part of the support 2 and the hollow part14 are aligned along an axis. The lower base 10 receives, through a lateral mounting portion thereof, a wire from the vehicle which supplies electricity to the bulb 1.

The support 2 is fixed to the lower base 10 so that the bulb 1 is substantially vertically disposed and extends downwardly from the bulb receptor socket.

In another embodiment (not illustrated), the external rear view mirror apparatus is similar to the first embodiment except that the support of the lateral light is not fixed to the lower articulated base 10 and does not have connected to it the lower free end of the C-shaped support 12. Instead, the support of the lateral light support includes a brace or suitable fixing device to fix the lateral light to the lower section of the C-shaped support, this lower section being directly connected to the lower articulated base 10. The brace enables the lateral light to be adjustably positioned along the lower section.

Whilst particular embodiments have been described, it will be understood that various modifications may be made without departing from the scope of the invention. For example, the lateral light may be a flashing light such as a vehicle indicator or blinker. The light may alternatively be mounted elsewhere on the C-shaped support..

## Claims

1. An external rear view mirror apparatus (11) for an automotive vehicle comprises a C-shaped support (12) with an adjustable mirror (13), the free ends of C-shaped support each being connected to an articulated base (10,10') adapted to be connected to a side of the vehicle, and at least one lateral light comprising a light source (1), the lateral light being incorporated into said at least one base (10) and/or being fixed to a section of the C-shaped support (12).

2. An apparatus as claimed in claim 1, wherein the light source comprises a bulb (1) and the lateral light includes a support (2) having a bulb receptor for the bulb, a non-opaque cover (3) covering the bulb and being connected to the support, and the support including a brace fixed to a section of the C-shaped support (12).

3. An apparatus as claimed in claim 1, wherein the light source comprises a bulb (1) and the lateral light includes a support (2) having a bulb receptor for the bulb, a non-opaque cover (3) covering the bulb and being connected to the support, and the support (2) is adapted to be connected to a free end of the C-shaped support (12) and at least a part of the support (2) is adapted to be connected to one of said articulated bases (10,10').

4. An apparatus as claimed in claim 1, 2 or 3, wherein one base (10) is adapted to be beneath the other base (10') when the apparatus is fixed to the side of a vehicle.

5. An apparatus as claimed in claim 4, wherein the lateral light is incorporated into or attached directly to the lower base (10).

6. An apparatus as claimed in claim 4 or 5, wherein the lateral light is fixed to a lower section of the C-shaped support (12).

7. An apparatus as claimed in claim 4, 5 or 6, wherein the bulb (1) is disposed so as to project in a substantially downward direction.

8. An apparatus as claimed in claim 3 or any claim dependent thereon, wherein said part of the support (2) adapted to be connected to one of said articulated bases (10) is connected to a hollow part (14) in one of said bases (10) via a spring and washer set and said support (2) is adapted to supply electricity from the vehicle to the bulb (1).

9. An apparatus as claimed in any preceding claim wherein the lateral light is adapted to flash.

10. An automotive vehicle including an external rear view mirror apparatus (11) as claimed in any preceding claim.
